# EUROPÄISCHE PATENTANMELDUNG

(11) **EP 4 693 096 A1**
(43) Veröffentlichungstag der Anmeldung: **11.02.2026**
(21) Anmeldenummer: 24193144.3
(22) Anmeldetag: 06.08.2024
(51) Int. Cl.: G06K 7/10

(54) **VERFAHREN ZUM BETREIBEN EINER RFID-ANORDNUNG SOWIE RFID-ANORDNUNG**

(71) Anmelder: Siemens Aktiengesellschaft, 80333 München (DE)
(72) Erfinder: Harrer, Michael, 91325 Adelsdorf (DE); Hein, Daniel, 81549 München (DE); Häuser, Markus, 91463 Dietersheim (DE); Strixner, Ferdinand, 81739 München (DE); Weber, Marc Christian, 80339 München (DE)
(74) Vertreter: Siemens Patent Attorneys

(57) **Zusammenfassung**

Die Erfindung betrifft ein Verfahren zum Betreiben einer RFID-Anordnung bestehend aus einem RFID-Reader und einer Vielzahl von RFID-Transpondern, die sich im Funksende-/ Funkempfangsbereich des RFID-Readers zumindest temporär befinden, wobei der RFID-Reader zu zumindest einem ersten Zeitpunkt eine, insbesondere als RFID-Broadcast Nachricht und/oder Multicast-Nachricht gebildete, erste Anfragenachricht an die RFID-Transponder sendet, bei dem zumindest ein erster Teil der Vielzahl der RFID-Transponder eine Antwortnachricht an den RFID-Reader sendet, wobei der erste Teil durch eine aufgrund der Anfragenachricht zumindest ableitbare Information selektiert wird und wobei die ableitbare Information durch den RFID-Reader der Anfragenachricht aufgeprägt wird. Ferner betrifft die Erfindung eine RFID-Anordnung zur Durchführung des Verfahrens.

## Beschreibung

Die Erfindung betrifft ein Verfahren zum Betreiben einer RFID-Anordnung gemäß dem Oberbegriff des Anspruchs 1 sowie eine RFID-Anordnung gemäß dem Gattungsbegriff des Anspruchs 12.

Die Verwendung von hochfrequenten elektromagnetischen (Radio-)Wellen zur Identifikation von Objekten und Übertragung von Informationen zwischen Transpondern (Tags) und Lesegeräten ("Readern"), die so genannte "Radio Frequency IDentification" (RFID) Technologie ist bekannt. Es ist ferner bekannt, diese Technologie unter anderem zur Überwachung von Gütern und Waren, insbesondere in Fabriken, Lagerhäusern oder Logistikzentren einzusetzen.

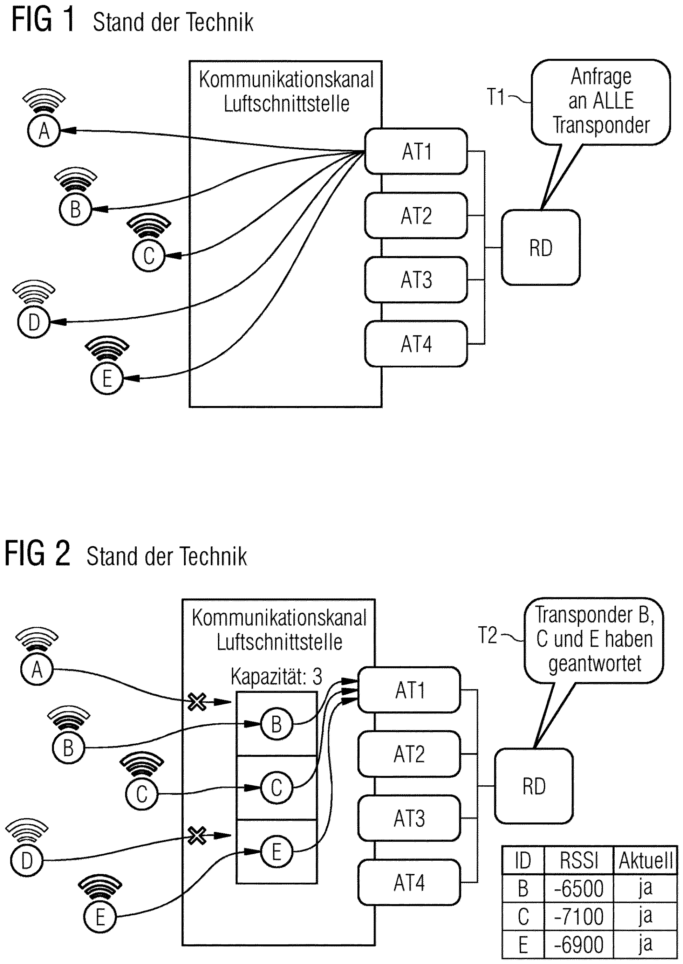

Dabei ist bekannt, dass bei einer drahtlosen Kommunikation, also über eine gemäß RFID definierte Luftschnittstelle, der RFID-Reader mithilfe von mindestens einer Antenne elektromagnetische Wellen aussendet, welche von in der Umgebung befindlichen Transpondern (Tags, auch RFID-Tags) empfangen werden können. Bei dieser Kommunikation können Botschaften wie beispielsweise "Anfrage an ALLE Transponder" enthalten sein (Figur 1 zeigt diese Verfahrensweise im Zusammenhang mit RFID, wie sie gemäß dem Stand der Technik erfolgt). Die Transponder lesen diese Nachricht aus, generieren und senden sodann eine Antwort an den Reader, wobei dies ebenfalls über die Luftschnittstelle erfolgt.

In der Figur 2, die den Stand der Technik dieser RFID-Anwendung zeigt, ist schematisch dargestellt, wie bei einer beispielhaften Kommunikationskapazität von 3 Slots pro einem Messzyklus, der beispielsweise im Rahmen einer Überwachung erfolgt, nur Teile der Transponder B, C und E von Antenne 1 AT 1 empfangen werden. Der Reader RD empfängt also nur ein unvollständiges Bild von in der Umgebung befindlichen Transpondern A... E. Darüber hinaus kann es auch geschehen, dass Antworten von zwei Transpondern gleichzeitig ankommen und damit kollidieren, wodurch beide Antworten nicht verarbeitet werden können.

Hierdurch entsteht also eine Ungleichverteilung, die die nutzbare Anzahl an Transpondern in manchen Anwendungen stark einschränkt, denn wären in dem in Figur 2 gezeigten Beispiel gemäß Stand der Technik beispielweise nur die Transponder A, B und C im Empfangsbereich der Antenne, so könnte auch Transponder A zuverlässig bei jeder Anfrage seine Zustandsdaten dem Reader übermitteln.

Um dieses Problem zu lösen, sind gemäß dem Stand der Technik prinzipiell zwei Herangehensweisen bekannt:
Man beschränkt die Anzahl der im Empfangsbereich befindlichen Transponder so weit, dass auch die Zustandsdaten der selten gelesenen Transponder ausreichend sind, um die nachfolgende Anwendung zu betreiben.

Man kann darauf achten, dass immer alle Transponder gleich gute Chancen haben den Kommunikationskanal zu belegen. Dies kann man evtl. durch Synchronisation von Ausrichtung und Entfernung erreichen.

Diese Problemlösungen sind einschränkend bzw. erfordern Zusatzaufwand.

Die der Erfindung zugrundeliegende Aufgabe ist es daher, eine technische Lösung anzugeben, die die Nachteile des Standes der Technik überwindet.

Diese Aufgabe wird ausgehend von dem Verfahren zum Betreiben einer RFID-Anordnung gemäß dem Oberbegriff des Anspruchs 1, durch dessen kennzeichnende Merkmale, sowie ausgehend von der RFID-Anordnung gemäß dem Gattungsbegriff des Anspruchs 1, durch dessen Merkmale, gelöst.

Bei dem erfindungsgemäßen Verfahren zum Betreiben einer RFID-Anordnung, bestehend aus einem RFID-Reader und einer Vielzahl von RFID-Transpondern, die sich im Funksende-/ Funkempfangsbereich des RFID-Readers zumindest temporär befinden, wobei der RFID-Reader zu zumindest einem ersten Zeitpunkt eine, insbesondere als RFID-Broadcast Nachricht und/oder Multicast-Nachricht gebildete, erste Anfragenachricht an die RFID-Transponder sendet, sendet zumindest ein erster Teil der Vielzahl der RFID-Transponder eine Antwortnachricht an den RFID-Reader, wobei der erste Teil durch eine aufgrund der Anfragenachricht zumindest ableitbare Information selektiert wird und wobei die ableitbare Information durch den RFID-Reader der Anfragenachricht aufgeprägt wird. Ferner betrifft die Erfindung eine RFID-Anordnung zur Durchführung des Verfahrens.

Mit diesem erfindungsgemäßen Ansatz wird es möglich Transponder, die aufgrund begrenzter Kommunikationskanäle sich einem RFID-Reader nicht melden können und damit quasi unsichtbar sind, bei nachfolgenden Anfragenachrichten sichtbar zu machen. So ist gewährleistet, dass prinzipiell jeder Transponder erfassbar und nutzbar ist.

Die erfindungsgemäße RFID-Anordnung ist gekennzeichnet durch Mittel zur Durchführung des Verfahrens und/oder einer seiner Weiterbildungen, womit sie zur Implementierung und mutatis mutandis damit zur Realisierung der im Zusammenhang mit dem erfindungsgemäßen Verfahren zum Betreiben einer RFID-Anordnung genannten Vorteile beiträgt.

Weitere vorteilhafte Ausgestaltungen und Weiterbildungen der Erfindung sind durch die Unteransprüche angegeben.

Gemäß einer Weiterbildung des erfindungsgemäßen Verfahrens wird die erste Nachricht zyklisch, insbesondere getriggert durch einen Messzyklus des RFID-Readers, wiederholt. Hierdurch wird ein regelmäßiges Update sichergestellt, wobei insbesondere bei Triggerung durch einen Messzyklus, bei dem Transponder bzw. deren Durchfahrt im Funksende-/ Funkempfangsbereich des RFID-Readers erfasst werden, sich diese Weiterbildung auf die Beobachtung von Transpondern synchronisiert und durch die regelmäßige Aktualisierung auch immer wieder Raum für die Erfassung neu aufscheinender ("durchfahrender") Transponder ermöglicht.

Eine weitere Weiterbildung des erfindungsgemäßen Verfahrens ist dadurch gegeben, dass die Aufprägung derart erfolgt, dass für den Fall, dass zumindest ein RFID-Transponder als zum ersten Teil disjunkter Transponder selektiert wird, der RFID-Reader die erste Anfragenachricht derart bildet, dass eine je zum ersten Teil disjunkter Transponder zugeordnete ID in die erste Anfragenachricht derart inkludiert und die Vielzahl der Transponder derart betrieben wird, dass bei Empfang der eigenen ID eine Antwort auf die erste Anfragenachricht für zumindest eine folgende Anfragenachricht ausbleibt.

Hierdurch wird auf geschickte Weise die Möglichkeit der RFID-Anordnung genutzt, IDs in Anfragenachrichten zu inkludieren, was zum Ausblenden der bekannten/quasi sichtbaren Transponder führt und den quasi unsichtbaren Transpondern die Chance gibt, zum RFID-Reader mit ihrer Rückmeldung durchzukommen.

Das erfindungsgemäße Verfahren kann ferner des Weiteren derart vorteilhaft weitergebildet werden, dass die Selektion auf Grundlage zumindest eines Parameters, der seitens dem RFID-Reader und der Vielzahl der RFID-Transponder genutzten drahtlosen Kommunikationsschnittstelle, erfolgt. Hierdurch kann die Selektion auf die Anforderungen und Gegebenheiten der durch die RFID-Anordnung, bestehend aus RFID-Reader und einer Vielzahl von Transpondern, gegebenen Kommunikationsanordnung abgestimmt werden.

Das erfindungsgemäße Verfahren kann ergänzend derart weitergebildet werden, dass als Parameter vor dem ersten Zeitpunkt, insbesondere dem vorhergehenden Zyklus, die Historie der Auslastung der Kapazität der Kommunikationsschnittstelle ermittelt wird. Damit wird beispielsweise möglich, nur dann eine Selektion vorzunehmen, wenn die vorherigen Zustände nahelegen, dass nicht alle Transponder zum RFID-Reader durchkommen.

Eine weitere ergänzende Weiterbildung des erfindungsgemäßen Verfahrens besteht darin, dass der RFID-Reader zumindest der ersten Anfragenachricht die ID inkludiert, wenn aufgrund zumindest einer zumindest zu einem Zeitpunkt unmittelbar vor dem ersten Zeitpunkt versandten Anfragenachricht die Anzahl Antworten der Vielzahl der Transponder größer oder gleich der Anzahl der durch den Reader genutzten Kanäle der Kommunikationsschnittstelle ist. Die Durchführung der Selektion der nicht mehr antwortenden Transponder auf dieser Grundlage ist besonders geeignet, um die Möglichkeiten der Kommunikationsschnittstelle optimal für alle Transponder zu nutzen.

Alternativ oder ergänzend kann das erfindungsgemäße Verfahren ferner derart weitergebildet werden, dass die Aufprägung derart erfolgt, dass für den Fall, dass zumindest ein RFID-Transponder als zum ersten Teil disjunkter Transponder selektiert wird, der RFID-Reader die erste Anfragenachricht derart bildet, dass abhängig von einer je Transponder des ersten Teils zugeordneten ID die erste Anfragenachricht ausschließlich an die Transponder des ersten Teils gerichtet und versendet wird, wobei die Transponder des ersten Teils für zumindest eine der ersten Anfragenachricht folgenden Anfragenachricht eine Antwort senden. Hierdurch wird ein Whitelist RFID Ansatz möglich, bei dem, beispielsweise ab dem Zeitpunkt, ab dem die Kommunikationsschnittstelle nicht mehr alle Transponderrückmeldungen durchgehen lassen kann, von einem Broadcast, also Anfragenachrichten, die an alle gesandt werden, zu einem Multicast, also Anfragenachrichten, die entsprechend der der Whitelist zugeordneten Transponder an einen eingeschränkten Teil der Transponder gesendet werden, gewechselt werden kann. Dies ist insbesondere von Vorteil, wenn auf die Durchfahrt von Transpondern geachtet wird, weil bei einem Erkennen der Durchfahrtrichtung wieder auf Broadcast geschaltet werden kann.

Insbesondere hierfür ist eine ergänzende Weiterbildung des erfindungsgemäßen Verfahrens von Vorteil, die darin besteht, dass
a) für das Bilden und Versenden der Anfragenachricht die dem jeweiligen Transponder des ersten Teils zugeordnete ID einer ersten, insbesondere als so genannte Whitelist gebildeten, Liste von IDs von Transpondern vor dem ersten Zeitpunkt entnommen wird,
b) für jeden Transponder dessen Antwort auf die erste Anfragenachricht vom RFID-Reader empfangen wird, die zugehörige ID in einer zweiten, insbesondere als so genannte Blacklist gebildeten, Liste von IDs von disjunkten Transpondern zumindest temporär zu einem dem ersten Zeitpunkt folgenden Zeitpunkt gespeichert und für den Fall, dass die ID in der ersten Liste enthalten war, dort gelöscht wird, weil nach Erkennen der Durchfahrtslisten die Listen entsprechend aktualisiert werden können.

Alternativ oder ergänzend kann das erfindungsgemäße Verfahren derart weitergebildet werden, dass die Transponder der zweiten Liste nach Ablauf einer, insbesondere festlegbaren, Zeit gelöscht werden.

Eine weitere Weiterbildung des erfindungsgemäßen Verfahrens ist dann gegeben, wenn ein Rücksetzen der Selektion des ersten Teils, der ersten Liste und/oder zweiten Liste erfolgt, wenn zu mindestens einem folgenden Zeitpunkt, insbesondere während eines festlegbaren Zeitraums, beispielsweise des Messzyklus, die Anzahl der Antworten der Vielzahl der Transponder die Anzahl der verfügbaren Kanäle der Kommunikationsschnittstelle unterschreitet.

Gemäß einer weiteren Weiterbildung des erfindungsgemäßen Verfahrens erfolgt die Selektion derart, dass dem ersten Teil diejenigen Transponder zugeordnet werden, die im vorherigen Zyklus auf die Anfragenachricht geantwortet haben. Hierdurch ist eine einfache Lösung für das Selektieren und Deselektieren gegeben.

Im Folgenden werden weitere Vorteile und Details der Erfindung sowie Weiterbildungen der Erfindung anhand eines ausgehend von den Figuren 1 bis 3 erläuterten Standes der Technik in der Figur 4 und Figur 5 dargestellten Ausführungsbeispiels näher erläutert. Es zeigen die
- Figur 1: Ein RFID-Reader sendet eine Anfrage an alle in der Umgebung befindlichen Transponder.
- Figur 2: Alle Transponder antworten, allerdings ist die Kapazität des Kommunikationskanals überschritten.

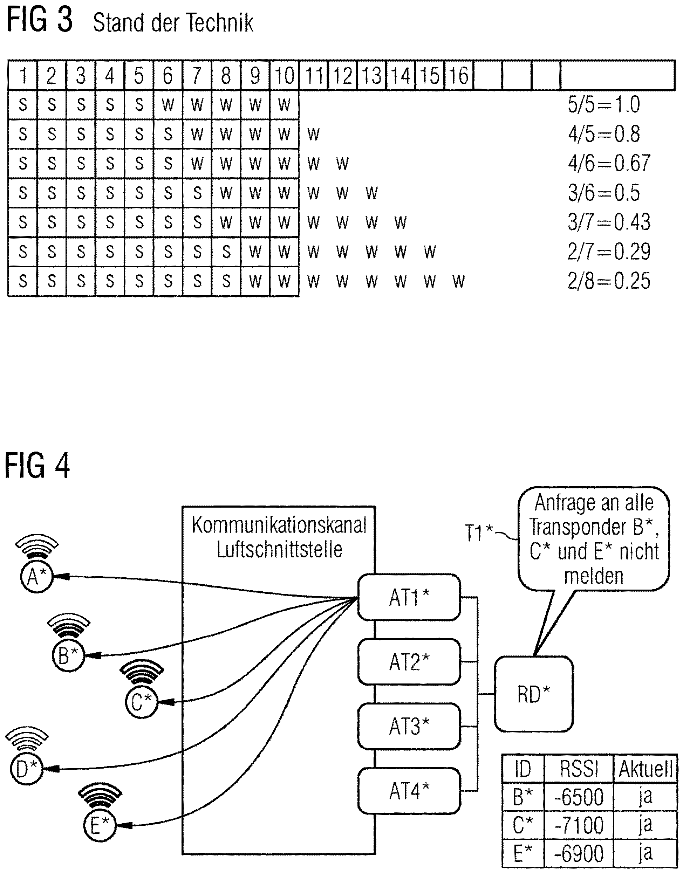

- Figur 3: Rechenbeispiel für die bisherige Lösung. Starke Transponder (s) und schwache Transponder (w) konkurrieren um 10 verfügbare Slots auf dem Kommunikationskanal.
- Figur 4: Der Reader nutzt in unserer Erfindung die Möglichkeit, bestimmte Transponder zu selektieren, welche nicht auf die Anfrage antworten sollen.

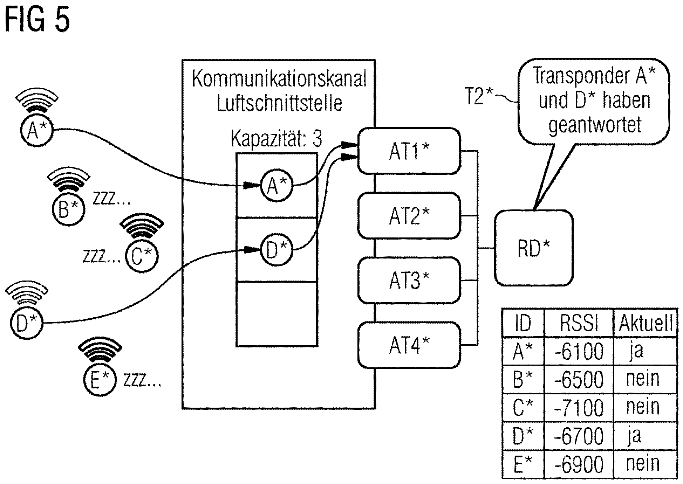

- Figur 5: Nur die nicht selektierten Transponder antworten auf dem Kommunikationskanal.

Bei dem, ausgehend von den in den Figuren 1 bis 3 gezeigten, aus dem Stand der Technik bekannten Lösungen, erläuterten Ausführungsbeispiel handelt es sich um eine bevorzugte Ausführungsform, anhand derer Vorteile sowie weitere Ausführungsformen bzw. Weiterbildungen der Erfindung näher erläutert werden.

Insbesondere zeigen die nachfolgenden Erläuterungen lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis der unabhängigen Ansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

Bei dem Ausführungsbeispiel bzw. den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind.

Des Weiteren sind die beschriebenen Ausführungsformen auch durch weitere der bereits beschriebenen Merkmale der Erfindung ergänzbar.

In der Figur 1 ist wie eingangs bereits erläutert beispielhaft eine RFID-Anordnung, die gemäß dem Stand der Technik betrieben wird, dargestellt. Zu erkennen ist ein RFID-Reader RD, der zu einem ersten Zeitpunkt T1 eine Anfrage an alle Transponder A... E, die sich in der Umgebung befinden, also alle sich im Empfangsbereich der Antennen AT1...AT4 aufhaltenden Transponder A... E, sendet, wobei dieses Senden über einen Kommunikationskanal, also eine gemäß RFID definierte Luftschnittstelle erfolgt.

Die Figur 2 zeigt das Verhalten der Transponder A... E als Antwort auf die zum ersten Zeitpunkt T1 versandte Anfrage. Zu erkennen ist, dass aufgrund der Kapazität der Luftschnittstelle, die im Beispiel drei Slots für die Kommunikation zur Verfügung stellt, nur drei Transponder B, C und E der fünf Transponder A... E mit Ihrer Antwort auf die zum ersten Zeitpunkt T1 versandte Anfrage des Reader RD durchkommen, obwohl sich alle fünf Transponder A... E im Empfangsbereich einer ersten Antenne AT1 der vorhandenen Antennen AT1...AT4 befinden.

Dies ist für den Reader RD nicht transparent. D.h. der Reader hat keine Kenntnis darüber, dass weitere Transponder A, D geantwortet hätten und geht, wie in der Figur 2 schematisch angedeutet, davon aus, dass nur die drei Transponder, die die Slots erhalten haben, geantwortet haben. Entsprechend werden nicht alle Transponder A... E genutzt.

Dies wird anhand der in Figur 3 gezeigten Tabelle noch etwas deutlicher. Hier sind Funkkanäle aufgetragen, die wie in den vorhergehenden Figuren 1 und 2 gemäß Stand der Technik einer sie übersteigenden Anzahl an Transpondern gegenüberstehen. Im gezeigten Fall stehen 16 Transponder 10 Slots gegenüber.

Die Tabelle zeigt nun wie sich zu verschiedenen Zeitpunkten (entspricht den Zeilen) zu ersten Zeiten T1 die Stärke der Transponder darstellt, wobei der Einfachheit wegen nur zwischen starken Transpondern, mit "s" bezeichnet, und schwachen Transpondern, mit "w" bezeichnet, unterschieden wird und die Spalten entsprechend gekennzeichnet sind. Zu erkennen ist, dass die Transponder gemäß diesem Beispiel um 10 verfügbare Slots, grau hinterlegte Spalten, auf dem Kommunikationskanal konkurrieren.

An der Tabelle erkennbar ist, dass bei einer höheren Zahl an Transpondern, die sich im Raum bewegen und grundsätzlich im Empfangsbereich der Antennen AT1...AT4 liegen, die schwachen Transponder unterhalb der Mindestanforderung der Signalstärke liegen und damit nicht genutzt werden.

Ein diese Nachteile überwindendes Ausführungsbeispiel der Erfindung wird nun ausgehend von Figur 4 erläutert. Bei diesem Ausführungsbeispiel der Erfindung wird die in den gegenwärtigen RFID Systemen gegebene Möglichkeit genutzt, in der Anfrage von Reader zu Transponder, IDs von Transpondern anzugeben, die nicht auf diese Anfrage antworten sollen.

Gemäß dem Ausführungsbeispiel wird also nicht wie zu dem ersten Zeitpunkt T1 gemäß dem Stand der Technik in Figur 1 nach allen möglichen Transpondern im Empfangsbereich der Antenne angefragt, sondern es wird beim ersten Zeitpunkt gemäß Ausführungsbeispiel T1* selektiert. Gemäß Ausführungsbeispiel erfolgt dies beispielsweise durch Unterdrückung bzw. Auslassung von Transpondern IDs B*, C*, E*, von denen der gemäß Ausführungsbeispiel ausgestaltete und betriebene Reader RD* erst kürzlich Antworten erhalten hat.

Die gemäß Ausführungsbeispiel der Erfindung ausgestalteten und betriebenen Transponder A*... E* erhalten also im Empfangsbereich der Antennen die Anfrage des Readers RD*, allerdings überprüfen gemäß Ausführungsbeispiel der Erfindung alle Transponder A*... *E*, bevor sie antworten, ob ihre ID den selektierten IDs in der Anfrage entspricht. Ist dies der Fall, so antworten sie nicht und belegen damit auch keine Kapazität auf dem Kommunikationskanal.

Figur 5 zeigt in der Tabelle, dass jetzt auch Transponder A* und D*, welche eine schwierigere Empfangssituation im Raum vorfinden, Zugang zum Kommunikationskanal erhalten, so dass die Antenne A T1 * die Antworten der Transponder A* und D* an den Reader weitergibt, welcher nun ein vollständigeres Bild von allen im Raum befindlichen Transpondern hat.

Die Erfindung ist aber nicht auf das gezeigte Ausführungsbeispiel eingeschränkt. Vielmehr ist es so, dass die Erfindung durch verschiedene Ausführungsbeispiele und Weiterbildungen vorteilhaft umgesetzt werden kann. Beispielsweise sind alternative Methoden, insbesondere zur Bestimmung der zu selektierenden Transponder B*, C*, E* möglich, nach denen der Reader RD* entscheiden könnte, welche IDs in der Anfragenachricht als selektiert gekennzeichnet sind. Hierzu seien einige Beispiele kurz umrissen:
1. Nach einer Weiterbildung können IDs abhängig von der Anwendung, insbesondere der nachfolgenden Anwendung, die die Transponder A*... E* nutzen könnte, selektiert werden, indem die Transponder A*... E*, für die die nachfolgende Anwendung erfolgreich Ergebnisse berechnet hat, für die nächsten Anfragezyklen ausgeschlossen werden.

Ein Beispiel einer derartigen Anwendung wäre die Durchfahrtsrichtungserkennung, für die sich das erfindungsgemäße Vorgehen wie folgt ergeben würde:
Solange weniger Transponder A*... E* sichtbar sind als der Reader RD* Antworten verarbeiten kann, wird nichts selektiert - alle Transponder im Empfangsbereich werden aufgefordert zu senden (Broadcast).

Sobald die Anzahl der Antworten die Reader-Kapazität erreicht, wird in zukünftigen Anfragen ein Whitelist RFID-Select beigefügt, der nur diejenigen Transponder zur Antwort auffordert, welche beispielsweise im letzten Zyklus oder im Rahmen einer definierten Zeitspanne geantwortet haben (Multicast). Es kommen danach also maximal so viele Antworten, wie der Reader RD* empfangen kann.

Sobald die Durchfahrtrichtung der beobachteten Transponder A*... E* zuverlässig erkannt wurde, wird wieder auf Broadcast umgeschaltet und das Verfahren beginnt von vorne.

Bereits erkannte Transponder A*... E* können auf die Blacklist des RFID-Selects gesetzt werden, so dass sie die Empfangskapazität des Readers RD* nicht beanspruchen, und andere Transponder A*... E* (mit ggf. niedrigerer Sendeleistung) zum Zug kommen können. Gemäß einer Weiterbildung werden Transponder beispielsweise nach einer, insbesondere einstellbaren, Zeit wieder von der Blacklist gelöscht, so dass die Transponder bei einer weiteren Durchfahrt wieder erkannt werden können.

2. Gemäß einer Weiterbildung werden Transponder A*... E*, welche sich im letzten Zyklus gemeldet haben, im nächsten Zyklus ausgeschlossen.

3. Nach einer weiteren Weiterbildung werden IDs wieder von der Selektion der auszulassenden Transponder B*, C*, E* entfernt, wenn die Kapazität des Kommunikationskanals einmal oder mehrmals nicht ausgeschöpft wurde.

Einer der Vorteile der Erfindung und seiner Weiterbildungen besteht unter anderem darin, dass die bekannte RFID-Hardware, abgesehen von der Einrichtung zur Durchführung des Verfahrens und Betriebs gemäß Erfindung, es ermöglicht, dass Zustandsdaten von mehr Transpondern gesammelt werden als es gemäß Stand der Technik möglich ist.

Allen Weiterbildungen ist auch gemein, dass Transponder A*, D* mit ungünstiger Empfangsposition regelmäßig die Chance haben, einen Platz auf dem Kommunikationskanal zu erhalten, so dass auch diese Transponder A*, D* genügend Daten sammeln können, um von der nachfolgenden Anwendung verarbeitet zu werden.

Vorzugsweise wird die Erfindung und ihre Weiterbildungen in einem Umfeld eingesetzt bzw. derart betrieben, dass eine Geschwindigkeit, mit der sich die Transponder A*... E* durch das Messfeld bewegen, und Messzyklen pro Zeit sowie maximale Zahl der gleichzeitig sichtbaren, d.h. erfassbaren, Transponder A*... E* in einem Verhältnis stehen, welches eine optimale Verwirklichung der Vorteile der Erfindung ermöglicht.

Indem man das erfindungsgemäße Verfahren anwendet, das bestimmt, welche Transponder IDs im Selektionsbereich der Reader-Anfrage landen, indem dies auf die nachfolgende Anwendung abgestimmt ist, kann man je nach Anwendungsfall die maximale Transponderanzahl nutzen. Dieser Vorteil sei im Folgenden anhand eines stichpunktartig erläuterten Beispiels skizziert:
- Für ein Beispiel sei angenommen, dass eine Anwendung mindestens 5 Transponderantworten pro Sekunde benötigt.
- Der Kommunikationskanal sei gemäß dem Beispiel so dimensioniert, dass er eine Kapazität von 10 Slots hat und somit 10-mal pro Sekunde die Transponder abgefragt werden können.
- Ferner wird für das Beispiel angenommen, es würde ein Transpondertyp verwandt, der sich so verhält, dass die Hälfte der Transponder immer sofort den zur Verfügung stehenden Kanal belegt und die andere Hälfte nur die danach noch freien Slots erhält.
- Dann würden gemäß Stand der Technik nur maximal 13 Transponder verwendet werden. 7 Transponder würden dabei in jedem Zyklus Zugriff auf den Kanal erhalten und haben am Ende jeweils 10 Antworten pro Sekunde gesendet. 6 Transponder würden durchschnittlich nur in jedem zweiten Zyklus Zugriff auf die verbleibenden 3 Kapazitätsslots erhalten. Dies ergäbe für sie die mindestens erforderlichen 5 Antworten pro Sekunde. Bei einer höheren Zahl an Transpondern im Raum liegen die schwachen Transponder regelmäßig unterhalb der Mindestanforderung der Anwendung, wie sich auch in der Figur 3 gemäß Stand der Technik zeigt.
- Durch Anwendung des erfindungsgemäßen Verfahrens, könnten für diese Anwendung und das beschriebene Beispiel mit dem genannten Transpondertyp bis zu 20 Transponder unterstützt bzw. genutzt werden. Somit mehr als 50% mehr als bei der aus dem Stand der Technik bekannten Vorgehensweise.

Diese erfindungsgemäß verbesserte Lokalisierung von Transpondern hat aber nicht nur den Vorteil, dass die Anzahl der genutzten Transponder deutlich verbessert wird, wie im Folgenden deutlich wird.

Bei einem typischen Aufbau eines RFID-Systems nutzt der Reader RD nacheinander die unterschiedlich ausgerichteten Antennen AT1...AT4, um eine gute Raumabdeckung beim Lesen von RFID-Transpondern A... E zu ermöglichen und ggf. die ungefähre Transponderposition aus mehreren Perspektiven zu triangulieren.

Aufgrund von verschiedenen Eigenschaften, wie Ausrichtung, Transpondertyp, Entfernung etc., ist es möglich, dass wie oben bereits erläutert manche Tags (Transponder) deutlich häufiger die Kapazität des Kommunikationskanals ausnutzen als andere. Dies ist unvorteilhaft für den Fall, dass man die in den Antworten der Transponder enthaltenen Zustandsdaten der Transponder für bestimmte Anwendungen verwenden möchte.

Solche Zustandsdaten sind zum Beispiel RSSI-Werte oder Phaseninformationen. Wenn die auf diesen Informationen aufbauende Anwendung zum Beispiel daraus den Ort oder die Bewegungsrichtung ableiten soll, so kann es passieren, dass für manche Transponder keine ausreichenden Daten am Reader aufgezeichnet wurden, aus denen sich diese Vorhersagen zuverlässig berechnen lassen. Diesen Nachteil behebt die Anwendung des erfindungsgemäßen Verfahrens.

## Patentansprüche

1. Verfahren zum Betreiben einer RFID-Anordnung, bestehend aus einem RFID-Reader und einer Vielzahl von RFID-Transpondern, die sich im Funksende-/Funkempfangsbereich des RFID-Readers zumindest temporär befinden, wobei der RFID-Reader zu zumindest einem ersten Zeitpunkt eine, insbesondere als RFID-Broadcast Nachricht und/oder Multicast-Nachricht gebildete, erste Anfragenachricht an die RFID-Transponder sendet,
**dadurch gekennzeichnet, dass** zumindest ein erster Teil der Vielzahl der RFID-Transponder eine Antwortnachricht an den RFID-Reader sendet, wobei der erste Teil durch eine aufgrund der Anfragenachricht zumindest ableitbare Information selektiert wird und wobei die ableitbare Information durch den RFID-Reader der Anfragenachricht aufgeprägt wird.

2. Verfahren nach dem vorhergehenden Anspruch,
**dadurch gekennzeichnet, dass** die erste Nachricht zyklisch, insbesondere getriggert durch einen Messzyklus des RFID-Readers, wiederholt wird.

3. Verfahren nach einem der vorhergehenden Ansprüche,
**dadurch gekennzeichnet, dass** die Aufprägung derart erfolgt, dass für den Fall, dass zumindest ein RFID-Transponder als zum ersten Teil disjunkter Transponder selektiert wird, der RFID-Reader die erste Anfragenachricht derart bildet, dass eine je zum ersten Teil disjunkter Transponder zugeordnete ID in die erste Anfragenachricht derart inkludiert und die Vielzahl der Transponder derart betrieben wird, dass bei Empfang der eigenen ID eine Antwort auf die erste Anfragenachricht für zumindest eine folgende Anfragenachricht ausbleibt.

4. Verfahren nach einem der vorhergehenden Ansprüche,
**dadurch gekennzeichnet, dass** die Selektion auf Grundlage zumindest eines Parameters der seitens dem RFID-Reader und der Vielzahl der RFID-Transponder genutzten drahtlosen Kommunikationsschnittstelle erfolgt.

5. Verfahren nach dem vorhergehenden Anspruch,
**dadurch gekennzeichnet, dass** als Parameter vor dem ersten Zeitpunkt, insbesondere dem vorhergehenden Zyklus, die Historie der Auslastung der Kapazität der Kommunikationsschnittstelle ermittelt wird.

6. Verfahren nach dem vorhergehenden Anspruch,
**dadurch gekennzeichnet, dass** der RFID-Reader zumindest der ersten Anfragenachricht die ID inkludiert, wenn aufgrund zumindest einer zumindest zu einem Zeitpunkt unmittelbar vor dem ersten Zeitpunkt versandten Anfragenachricht die Anzahl Antworten der Vielzahl der Transponder größer oder gleich der Anzahl der durch den Reader genutzten Kanäle der Kommunikationsschnittstelle ist.

7. Verfahren nach einem der Ansprüche 1, 4 bis 6,
**dadurch gekennzeichnet, dass** die Aufprägung derart erfolgt, dass für den Fall, dass zumindest ein RFID-Transponder als zum ersten Teil disjunkter Transponder selektiert wird, der RFID-Reader die erste Anfragenachricht derart bildet, dass abhängig von einer je Transponder des ersten Teils zugeordneten ID die erste Anfragenachricht ausschließlich an die Transponder des ersten Teils gerichtet und versendet wird, wobei die Transponder des ersten Teils für zumindest eine der ersten Anfragenachricht folgende Anfragenachricht eine Antwort senden.

8. Verfahren nach dem vorhergehenden Anspruch,
**dadurch gekennzeichnet, dass**
a) für das Bilden und Versenden der Anfragenachricht die dem jeweiligen Transponder des ersten Teils zugeordnete ID einer ersten, insbesondere als so genannte Whitelist gebildeten, Liste von IDs von Transpondern vor dem ersten Zeitpunkt entnommen wird,
b) für jeden Transponder dessen Antwort auf die erste Anfragenachricht vom RFID-Reader empfangen wird, die zugehörige ID in einer zweiten, insbesondere als so genannte Blacklist gebildeten, Liste von IDs von disjunkten Transpondern zumindest temporär zu einem dem ersten Zeitpunkt folgenden Zeitpunkt gespeichert und für den Fall, dass die ID in der ersten Liste enthalten war, dort gelöscht wird.

9. Verfahren nach einem der beiden vorhergehenden Ansprüche,
**dadurch gekennzeichnet, dass** die Transponder der zweiten Liste nach Ablauf einer, insbesondere festlegbaren, Zeit gelöscht werden.

10. Verfahren nach einem der vorhergehenden Ansprüche 5 bis 9,
**dadurch gekennzeichnet, dass** ein Rücksetzen der Selektion des ersten Teils der ersten Liste und/oder zweiten Liste erfolgt, wenn zu mindestens einem folgenden Zeitpunkt, insbesondere während eines festlegbaren Zeitraums, beispielsweise des Messzyklus, die Anzahl der Antworten der Vielzahl der Transponder die Anzahl der verfügbaren Kanäle der Kommunikationsschnittstelle unterschreitet.

11. Verfahren nach einem der Ansprüche 2 bis 10,
**dadurch gekennzeichnet, dass** die Selektion derart erfolgt, dass dem ersten Teil diejenigen Transponder zugeordnet werden, die im vorherigen Zyklus auf die Anfragenachricht geantwortet haben.

12. RFID-Anordnung, bestehend aus einem RFID-Reader und einer Vielzahl von RFID-Transpondern, derart ausgestaltet, dass sie zur Durchführung des Verfahren nach einem der vorhergehenden Ansprüche ausgestaltet ist.
